# EUROPEAN PATENT APPLICATION

(11) **EP 2 763 087 A1**
(43) Date of publication of application: **06.08.2014**
(21) Application number: 14152949.5
(22) Date of filing: 28.01.2014
(51) Int. Cl.: G06Q 10/06, G06Q 50/12

(54) **Customer behavior analysis device, customer behavior analysis system and customer behavior analysis method**

(30) Priority: 01.02.2013 JP 2013018198
(71) Applicant: Panasonic Corporation, Kadoma-shi Osaka 571-8501 (JP)
(72) Inventor: Hirakawa, Kunio, Osaka, 540-6207 (JP); Uno, Yoshinobu, Osaka, 540-6207 (JP); Nakahata, Yuichi, Osaka, 540-6207 (JP)
(74) Representative: Eisenführ Speiser

(57) **Abstract**

A customer behavior analysis device includes: a tracking unit configured to track persons moving in an area around a self-service area where items are provided for self-service, based on image information provided by an imaging device capturing images of the area around the self-service area; a detection unit configured to obtain, based on a result of tracking performed by the tracking unit, a moving direction of each person relative to an access area, which a customer needs to enter to choose and pick up items from the self-service area, and a staying time of the person in the access area, and to detect non-completing persons who gave up completing self-service action based on the moving direction and the staying time; and an output information generation unit configured to generate output information representing a result of analysis based on a result of detection performed by the detection unit.

## Description

### TECHNICAL FIELD

The present invention relates to a customer behavior analysis device, customer behavior analysis system and customer behavior analysis method for performing analysis of the behavior of customers in commercial establishments.

### BACKGROUND OF THE INVENTION

There are a variety types of commercial establishments including restaurants such as casual dining restaurants, retail stores such as supermarkets, convenience stores, etc. Irrespective of the types of commercial establishments, developing improvement measures relating to the operation of the commercial establishment based on a result of analysis of the behavior of customers in the commercial establishment is beneficial to improve the customer satisfaction and streamline the operation of the commercial establishment, thereby increasing the sales and profit of the commercial establishment.

In connection with the analysis of customer behavior in a commercial establishment, technologies are known in which image information obtained by a camera set up to capture images in a retail store such as a supermarket or a convenience store is used to detect a customer who has accessed a display rack for items (see JP2012-022528A and JP2009-048430A) or to detect entrance and exit of a customer to and from various areas in the store and obtain a staying time of the customer in each area (see JP2006-285409A).

Some of the restaurants such as casual dining restaurants have a self-service area, such as a salad bar, where food items are offered for self-service. If the selection of food items provided at the self-service area does not meet the preference of a customer or the food item(s) the customer wants has run out, the customer may give up completing self-service action of choosing and picking up food items and return to his/her table without picking up food items. Further, when the self-service area is crowded with customers also, a customer may give up completing self-service action.

Thus, when a customer gave up completing self-service action, it can be assumed that there was some problem in the operation of the self-service system of the restaurant. Therefore, by detecting persons (customers) who gave up completing self-service action and study the causes that made them give up completing self-service action, it is possible to know problems in the restaurant that could result in complaints from customers before complaints are actually made, and, by taking measures to address the problems in the restaurant, it is possible to avoid complaints from customers and improve the customer satisfaction.

In the conventional technology, it may be possible to obtain information indicating the degree of customers' interest in offered items or the like based on the behavior of customers in the retail store. Further, by combining such information with the sales information provided by the POS system, it may be possible to obtain information useful in promoting sales. However, the conventional technology does not provide means for analyzing self-service action of customers, particularly for detecting persons who gave up completing self-service action, and thus, technology that can allow a user to readily know the status of occurrence of persons who approached the self-service area but gave up completing self-service action is desired.

### SUMMARY OF THE INVENTION

The present invention is made to solve the foregoing problems in the prior art, and a primary object of the present invention is to provide a customer behavior analysis device, customer behavior analysis system and customer behavior analysis method configured to allow a user to readily know the status of occurrence of persons who approached the self-service area but gave up completing self-service action of choosing and picking up an item from a self-service area.

To achieve the foregoing object, in a first aspect of the present invention, there is provided a customer behavior analysis device for performing analysis of self-service action of customers of choosing and picking up items from a self-service area in a commercial establishment where the items are offered for self-service, including: a person tracking unit configured to track persons moving in an area around the self-service area based on image information provided by an imaging device capturing images of the area around the self-service area; a non-completing person detection unit configured to obtain, based on a result of tracking performed by the person tracking unit, a moving direction of each person relative to an access area, which a customer needs to enter to choose and pick up items from the self-service area, and a staying time of the person in the access area, and to detect non-completing persons who gave up completing the self-service action based on the moving direction and the staying time; and an output information generation unit configured to generate output information representing a result of analysis based on a result of detection performed by the non-completing person detection unit, wherein the person tracking unit includes: a person recognition unit configured to determine whether an object detected in a designated area including the access area is recognized as a person, and when the object is recognized as a person, assign a person ID to the object; and a person correction unit configured to, when tracking of a first object recognized as a person fails in the designated area and thereafter a second object recognized as a person appears anew in the designated area, determine whether the first and second objects represent a same person, and, when it is determined that the first and second objects represent a same person, assign the second object with the same person ID that has been assigned to the first object, wherein the person correction unit determines that the first and second objects represent a same person when at least one of following two conditions is met: that a time period elapsed from a time when the tracking of the first object failed to a time when the second object appeared satisfies a predetermined closeness condition; and that a distance from a location where the tracking of the first object failed to a location where the second object appeared satisfies a predetermined closeness condition.

Further, in a second aspect of the present invention, there is provided a customer behavior analysis device for performing analysis of self-service action of customers of choosing and picking up items from a self-service area in a commercial establishment where the items are offered for self-service, including: a person tracking unit configured to track persons moving in an area around the self-service area based on image information provided by an imaging device capturing images of the area around the self-service area; a non-completing person detection unit configured to obtain, based on a result of tracking performed by the person tracking unit, a moving direction of each person relative to an access area, which a customer needs to enter to choose and pick up items from the self-service area, and a staying time of the person in the access area, and to detect non-completing persons who gave up completing the self-service action based on the moving direction and the staying time; and an output information generation unit configured to generate output information representing a result of analysis based on a result of detection performed by the non-completing person detection unit, wherein the non-completing person detection unit determines that a person is a non-completing person when a direction from which the person entered the access area and a direction to which the person left the access area are same and when the staying time of the person in the access area is shorter than a predetermined threshold value.

According to the foregoing structures, persons who approached the self-service area but gave up completing self-service action (non-completing persons) are detected and a result of analysis relating to the status of occurrence of non-completing persons is output, and thus, a user such as a manager of the commercial establishment can readily know the status of occurrence of non-completing persons. This makes it possible to study the causes that made customers give up completing self-service action and to know the problems in the commercial establishment that could result in complaints from customers before complaints are actually made. Therefore, by taking measures for addressing the problems in the commercial establishment, it is possible to avoid complaints from customers and improve the customer satisfaction. Particularly, even in circumstances where it is difficult to track persons, such as when an area around the self-service area is crowded with persons, it is possible to grasp the status of movement of persons by performing the person correction process as well as assessing the moving direction and staying time of each person, and therefore, it is possible to minimize failure of detection of non-completing persons who gave up completing self-service action and to detect non-completing persons with high detection rate and with high accuracy.

In a third aspect of the present invention, the commercial establishment is a restaurant and the items include food items.

According to this structure, since it requires a certain time for a person (customer) to put food items on his/her plate or the like from the self-service area, the staying time can indicate whether the person performed such serving action. Therefore, it is possible to detect non-completing persons who gave up completing self-service action with high accuracy.

In a fourth aspect of the present invention, the access area is divided into at least a first area and a second area, the first area adjoining the self-service area and the second area being space apart from the self-service area, and the non-completing person detection unit detects non-completing persons based on status of entry of persons into the first area and the second area.

According to this structure, it is possible to detect non-completing persons who gave up completing self-service action with high accuracy.

In a fifth aspect of the present invention, the non-completing person detection unit determines that a person is a non-completing person when a direction from which the person entered the access area and a direction to which the person left the access area are same and when the person did not enter the access area.

According to this structure, it is possible to detect non-completing persons who gave up completing self-service action with high accuracy.

In a sixth aspect of the present invention, the output information generation unit generates, as the output information, information relating to status of occurrence of the non-completing persons for each predetermined time period.

According to this structure, a user such as a manager of the commercial establishment is enabled to know the status of occurrence of non-completing persons, particularly the number of detections of non-completing persons (the number of non-completing persons detected) per predetermined time period (time slot). Thereby, the user can identify the time slot(s) in which the number of detections of non-completing persons is high and study the causes that made the customers give up completing self-service action.

In a seventh aspect of the present invention, the customer behavior analysis device further includes a display control unit configured to obtain image information from an image recording device that records the image information provided by the imaging device, and to output the image information to a display device, wherein the display control unit causes a screen for selecting a non-completing person to be displayed on the display device, and upon selection operation performed by a user, causes an image including a selected non-completing person to be displayed on the display device.

According to this structure, with the image including the non-completing person, a user can check in detail the situation in which the non-completing person gave up completing self-service action, and study the causes that made the person give up completing self-service action. Further, the user can confirm whether there was an erroneous detection of a non-completing person, namely, whether the person who was detected as a non-completing person actually gave up completing self-service action, whereby the user, such as a manager of the commercial establishment, can accurately know the status of occurrence of non-completing persons.

In an eighth aspect of the present invention, there is provided a customer behavior analysis system for performing analysis of self-service action of customers of choosing and picking up items from a self-service area in a commercial establishment where the items are offered for self-service, including: an imaging device configured to capture images of an area around the self-service area; and a plurality of information processing devices, wherein the plurality of information processing devices jointly include: a person tracking unit configured to track persons moving in the area around the self-service area based on image information provided by the imaging device; a non-completing person detection unit configured to obtain, based on a result of tracking performed by the person tracking unit, a moving direction of each person relative to an access area, which a customer needs to enter to choose and pick up items from the self-service area, and a staying time of the person in the access area, and to detect non-completing persons who gave up completing the self-service action based on the moving direction and the staying time; and an output information generation unit configured to generate output information representing a result of analysis based on a result of detection performed by the non-completing person detection unit, wherein the person tracking unit includes: a person recognition unit configured to determine whether an object detected in a designated area including the access area is recognized as a person, and when the object is recognized as a person, assign a person ID to the object; and a person correction unit configured to, when tracking of a first object recognized as a person fails in the designated area and thereafter a second object recognized as a person appears anew in the designated area, determine whether the first and second objects represent a same person, and, when it is determined that the first and second objects represent a same person, assign the second object with the same person ID that has been assigned to the first object, wherein the person correction unit determines that the first and second objects represent a same person when at least one of following two conditions is met: that a time period elapsed from a time when the tracking of the first object failed to a time when the second object appeared satisfies a predetermined closeness condition; and that a distance from a location where the tracking of the first object failed to a location where the second object appeared satisfies a predetermined closeness condition.

Further, in a ninth aspect of the present invention, there is provided a customer behavior analysis system for performing analysis of self-service action of customers of choosing and picking up items from a self-service area in a commercial establishment where the items are offered for self-service, including: an imaging device configured to capture images of an area around the self-service area; and a plurality of information processing devices, wherein the plurality of information processing devices jointly include: a person tracking unit configured to track persons moving in the area around the self-service area based on image information provided by the imaging device; a non-completing person detection unit configured to obtain, based on a result of tracking performed by the person tracking unit, a moving direction of each person relative to an access area, which a customer needs to enter to choose and pick up items from the self-service area, and a staying time of the person in the access area, and to detect non-completing persons who gave up completing the self-service action based on the moving direction and the staying time; and an output information generation unit configured to generate output information representing a result of analysis based on a result of detection performed by the non-completing person detection unit, wherein the non-completing person detection unit determines that a person is a non-completing person when a direction from which the person entered the access area and a direction to which the person left the access area are same and when the staying time of the person in the access area is shorter than a predetermined threshold value.

According to these structures, a user such as a manager of the commercial establishment is enabled to readily know the status of occurrence of non-completing person who gave up completing self-service action, similarly to the structures according to the first and second aspects of the present invention.

In a tenth aspect of the present invention, there is provided a customer behavior analysis method for performing analysis of self-service action of customers of choosing and picking up items from a self-service area in a commercial establishment where the items are offered for self-service, the analysis being performed by an information processing device set up inside or outside the commercial establishment, the method including: a first step of tracking persons moving in an area around the self-service area based on image information provided by an imaging device capturing images of the area around the self-service area; a second step of obtaining, based on a result of tracking in the first step, a moving direction of each person relative to an access area, which a customer needs enter to choose and pick up items from the self-service area, and a staying time of the person in the access area, and detecting non-completing persons who gave up completing the self-service action based on the moving direction and the staying time; and a third step of generating output information representing a result of analysis based on a result of detection in the second step, wherein the first step includes: a person recognition step of determining whether an object detected in a designated area including the access area is recognized as a person, and when the object is recognized as a person, assigning a person ID to the object; and a person correction step of, when tracking of a first object recognized as a person fails in the designated area and thereafter a second object recognized as a person appears anew in the designated area, determining whether the first and second objects represent a same person, and, when it is determined that the first and second objects represent a same person, assigning the second object with the same person ID that has been assigned to the first object, wherein in the person correction step it is determined that the first and second objects represent a same person when at least one of following two conditions is met: that a time period elapsed from a time when the tracking of the first object failed to a time when the second object appeared satisfies a predetermined closeness condition; and that a distance from a location where the tracking of the first object failed to a location where the second object appeared satisfies a predetermined closeness condition.

In an eleventh aspect of the present invention, there is provided a customer behavior analysis method for performing analysis of self-service action of customers of choosing and picking up items from a self-service area in a commercial establishment where the items are offered for self-service, the analysis being performed by an information processing device set up inside or outside the commercial establishment, the method including: a first step of tracking persons moving in an area around the self-service area based on image information provided by an imaging device capturing images of the area around the self-service area; a second step of obtaining, based on a result of tracking in the first step, a moving direction of each person relative to an access area, which a customer needs enter to choose and pick up items from the self-service area, and a staying time of the person in the access area, and detecting non-completing persons who gave up completing the self-service action based on the moving direction and the staying time; and a third step of generating output information representing a result of analysis based on a result of detection in the second step, wherein it is determined in the second step that a person is a non-completing person when a direction from which the person entered the access area and a direction to which the person left the access area are same and when the staying time of the person in the access area is shorter than a predetermined threshold value.

According to these structures, a user such as a manager of the commercial establishment is enabled to readily know the status of occurrence of non-completing person who gave up completing self-service action, similarly to the structures according to the first and second aspects of the present invention.

### BRIEF DESCRIPTION OF THE DRAWINGS

Now the present invention is described in the following in terms of preferred embodiments thereof with reference to the appended drawings, in which:
FIG. 1 is a diagram showing an overall structure of an analysis system according to an embodiment of the present invention;
FIG. 2 is a plan view showing an example of an interior layout of a restaurant;
FIG. 3 is an explanatory diagram showing an image captured by a camera 1 set up to capture images of an area around a salad bar 31;
FIG. 4 is a block diagram schematically showing a functional structure of a PC 3 set up at the restaurant;
FIG. 5 is an explanatory diagram showing an example of an analysis result screen displaying non-completing person detection information;
FIG. 6 is a block diagram schematically showing a configuration of a customer behavior analysis unit 43;
FIG. 7 is a flowchart showing a procedure of a process performed by the customer behavior analysis unit 43;
FIG. 8 is an explanatory diagram for explaining a process performed by a non-completing person determination unit 57;
FIG. 9 is a schematic plan view showing exemplary moving patterns of a person around the salad bar 31;
FIG. 10 is an explanatory diagram showing an example of an analysis result screen displaying container replacement information;
FIG. 11 is a block diagram schematically showing a structure of an item status analysis unit 44; and
FIG. 12 is an explanatory diagram showing an example of an image captured by the camera 1 set up to capture images of an area around the salad bar 31.

### DETAILED DESCRIPTION OF THE PREFERRED EMBODIMENTS

In the following, description will be made of an exemplary embodiment of the present invention with reference to the drawings.

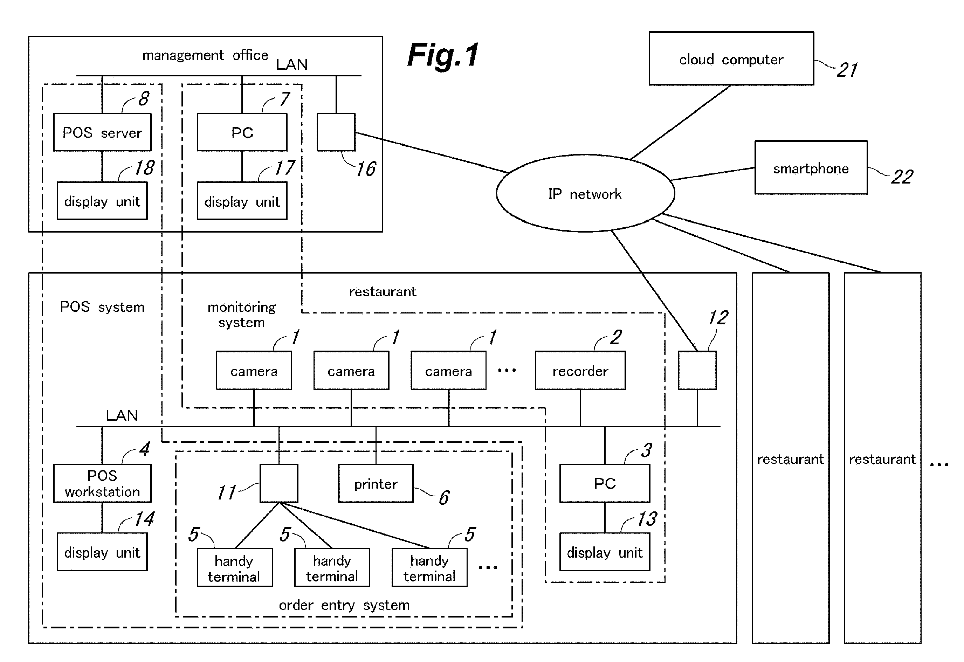

FIG. 1 is a diagram showing an overall structure of an analysis system according to this embodiment. This analysis system is designed for a casual dining restaurant chain, for example, and includes cameras (imaging device) 1, a recorder (image recording device) 2, a personal computer (PC) (customer behavior analysis device, item status analysis device, browser device) 3, a point of sale (POS) workstation (sales information management device) 4, handy terminals (order entry device) 5, and a printer 6, which are set up at each of the multiple restaurants within the chain. Further, the analysis system includes a PC (browser device) 7 and a POS server (sales information management device) 8, which are set up at a management office overseeing the multiple restaurants.

In each restaurant, the cameras 1, recorder 2, PC 3, POS workstation 4 and printer 6 are connected to a local area network (LAN) together with a wireless relay device 11 that relays the communication of the handy terminals 5 and a router 12 for connection with an Internet Protocol (IP) network. The PC 3 and the POS workstation 4 have respective display units (display devices) 13, 14 connected thereto. In the management office, the PC 7 and the POS server 8 are connected to a LAN together with a router 16 for connection with the IP network. The PC 7 and the POS server 8 have respective display units (display devices) 17, 18 connected thereto.

The cameras 1, recorder 2, PC 3 set up at each restaurant and PC 7 set up at the management office constitute a monitoring system for monitoring the interior of the restaurant. The cameras 1 are set up at appropriate locations in the restaurant to capture images of the various areas in the restaurant, and image information obtained thereby is recorded by the recorder 2. The PC 3 set up at the restaurant and the PC 7 set up at the management office can display the real-time images of various areas in the restaurant captured by the cameras 1 or the past images of various areas in the restaurant recorded by the recorder 2, and this allows a user at the restaurant or the management office to check the situation in the restaurant.

The handy terminals 5, wireless relay device 11 and printer 6 set up at each restaurant constitute an order entry system for accepting customer orders. Each handy terminal 5 is to be carried by a restaurant staff member (such as a waiter or a waitress), whereby the staff member, upon taking orders from customers, can enter the content of the orders (ordered menu items, number of orders for each menu item) into the handy terminal 5. The printer 6 is set up in the kitchen, and when the staff member enters order content into the handy terminal 5, the order content is output from the printer 6 so that the order content is communicated to the kitchen staff.

The POS workstation 4 and the order entry system set up at each restaurant and the POS server 8 set up at the management office constitute a POS (point of sale) system that manages sales information relating to the sales of each restaurant. This POS system manages, as the sales information, order content, order time, checkout time, order method, number of customers, etc. This sales information is shared between the POS workstation 4 and the POS server 8. The POS workstation 4 manages the sales information of the restaurant at which the POS workstation 4 is set up, and the POS server 8 manages the sales information of all member restaurants under its management.

Each handy terminal 5 constituting the order entry system is adapted to allow the restaurant staff member to enter order information other than the order content (ordered menu items, number of orders for each menu item), such as a number of customers sitting at a table, table number (seat number), etc., and the order information entered is transmitted to the POS workstation 4. In addition to the function for managing the sales information, the POS workstation 4 has a register function for performing checkout, and is set up at the checkout counter. This POS workstation 4 is connected with a cash drawer and a receipt printer not shown in the drawings. The POS workstation 4 generates sales information based on the order information transmitted from the handy terminals 5 and checkout information obtained at the time of checkout.

The PC 3 set up at each restaurant is configured to realize a customer behavior analysis device that performs analysis of the behavior of customers in the restaurant and an item status analysis device that performs analysis of the status of items placed in a certain area of the restaurant. The analysis result information generated by the PC 3 set up at the restaurant can be displayed on the PC 3 itself, and also is transmitted to the PC 7 set up at the management office, such that the information can be displayed on the PC 7. Thus, the PCs 3 and 7 are each configured as a browser device that allows a user to view the analysis result information.

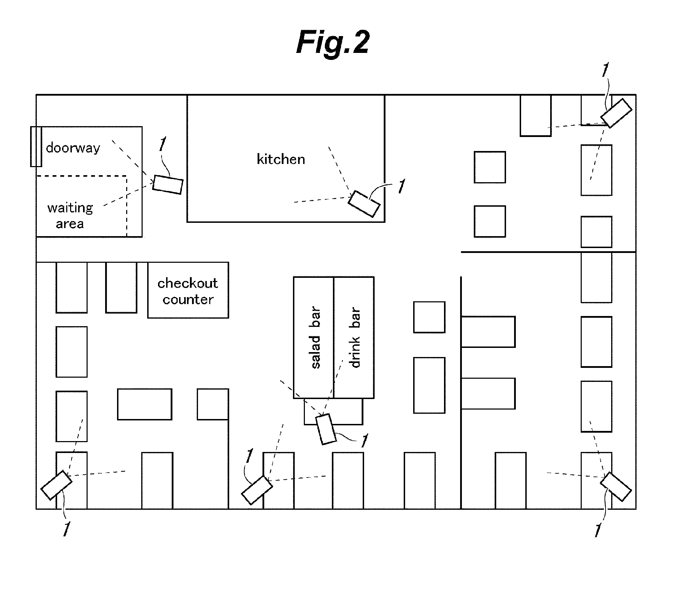

FIG. 2 is a plan view showing an example of an interior layout of a restaurant. The restaurant includes a doorway, a waiting area, a checkout counter, tables with seats, a salad bar (self-service area), a drink bar, and a kitchen. The salad bar and the drink bar are a buffet-style table or counter on which food items and drinks are provided, respectively, for customers to serve themselves. Further, multiple cameras 1 are set up at appropriate locations in the restaurant. Specifically, in the example shown in FIG. 2, the cameras 1 are set up to capture images at the doorway, tables, salad bar and kitchen.

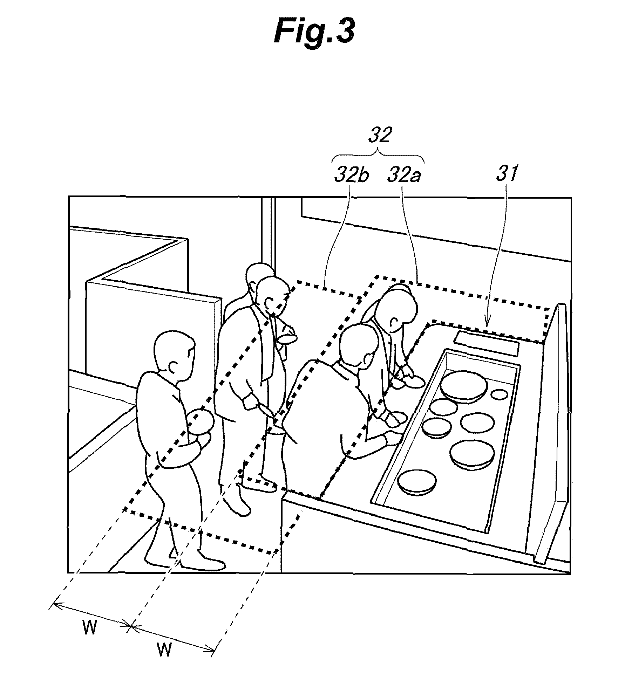

FIG. 3 is an explanatory diagram showing an image captured by a camera 1 set up to capture images of an area around a salad bar 31. The camera 1 for capturing images of an area around the salad bar 31 is mounted on the ceiling near the salad bar 31, such that the camera 1 captures images of the salad bar 31 and customers and staff members moving in the area around the salad bar 31. At the salad bar 31, a variety of food items are provided in such a manner that the food items are served in respective separate containers, and customers choose and put desired food items on their own plates or the like from the salad bar 31.

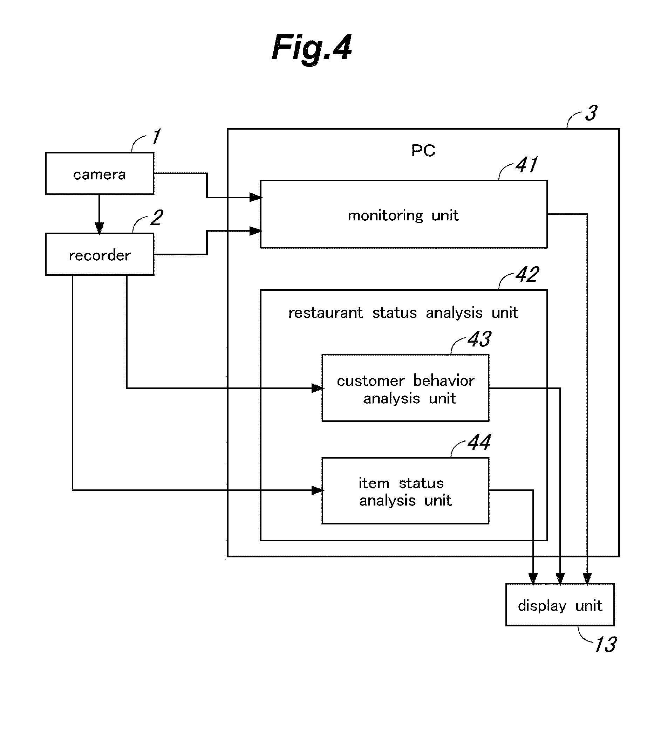

FIG. 4 is a block diagram schematically showing a functional structure of the PC 3 set up at a restaurant. The PC 3 includes a monitoring unit 41 and a restaurant status analysis unit 42. The monitoring unit 41 allows the PC 3 to function as a monitoring system for monitoring the interior of the restaurant. The monitoring unit 41 controls the operation of the cameras 1 and the recorder 2 and enables a user to have a real-time view of the images of various areas in the restaurant captured by the cameras 1 and to view the images of various areas in the restaurant recorded in the recorder 2.

The restaurant status analysis unit 42 includes a customer behavior analysis unit 43 and an item status analysis unit 44. The customer behavior analysis unit 43 performs analysis of the behavior of customers in the restaurant, particularly in the vicinity of the salad bar in this embodiment. The item status analysis unit 44 performs analysis of the status of items placed in a certain area of the restaurant, specifically the status of containers containing food items and laid out at the salad bar in the present embodiment.

It is to be noted that the monitoring unit 41 and the restaurant status analysis unit 42 are realized by executing programs for monitoring and restaurant status analysis by the CPU of the PC 3. These programs may be pre-installed in the PC 3 serving as an information processing device to embody a device dedicated for monitoring and restaurant status analysis functions, or may be provided to a user in the form stored in an appropriate recording medium as an application program that can be run on a general-purpose OS.

Next, description will be made of a customer behavior analysis process executed by the customer behavior analysis unit 43 of the PC 3 set up at the restaurant. In this customer behavior analysis process, analysis of the behavior of customers in the vicinity of the salad bar is performed. Particularly, in the present embodiment, non-completing person detection information relating to persons who gave up completing self-service action of choosing and picking up food items from the salad bar, namely, persons who approached the salad bar to pick up food items provided at the salad bar but left the salad bar without picking up food items (such a person will be referred to as a non-completing person hereinafter) is obtained.

As described in the foregoing, at the salad bar, food items are offered in such a manner that the food items are served in respective separate containers, and customers choose and put desired food items on their own plates or the like from the salad bar. When the selection of food items offered at the salad bar does not meet the preference of a customer or when the food item(s) the customer wants has run out, the customer may give up completing self-service action of choosing and picking up food items from the salad bar. Further, when the area in front of the salad bar is crowded with customers also, a customer may give up completing self-service action. In the customer behavior analysis process, such non-completing persons who give up completing self-service action are detected.

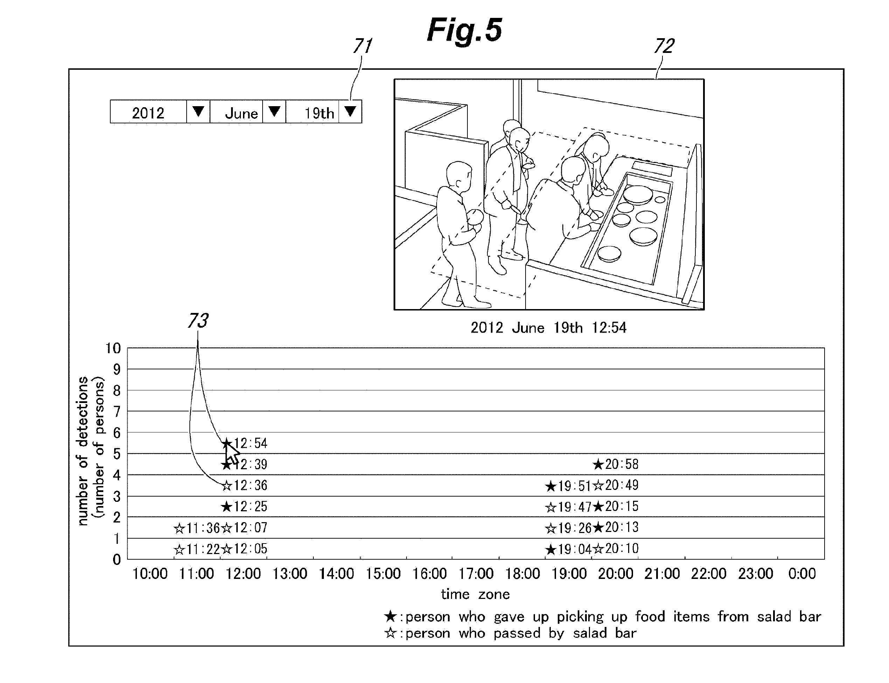

FIG. 5 is an explanatory diagram showing an example of an analysis result screen displaying non-completing person detection information. This analysis result screen is to be displayed on the display unit 13 of the PC 3 set up at the restaurant and the display unit 17 of the PC 7 set up at the management office. This analysis result screen shows, as the non-completing person detection information, the number of detections of non-completing persons (or number of persons detected as a non-completing person) and the time of each detection, for each time slot during opening hours of the restaurant (10:00 AM to 1:00 AM) on a designated date. From this analysis result screen, a user can understand the status of occurrence of non-completing persons for each time slot.

Further, this analysis result screen displays, in addition to the number of non-completing persons who gave up completing self-service action of choosing and picking up food items from the salad bar, the number of detections of passing persons (or number of persons detected as a passing person) and the time of each detection, for each time slot, where passing persons are persons who passed by in front of the salad bar. Thereby, a user can understand the status of occurrence of passing persons. Further, by combining the information relating to the non-completing persons and the information relating to the passing persons, a user can grasp the total number of persons who approached the salad bar but did not perform or complete self-service action. It is to be noted that the analysis result screen may be designed to display only information relating to non-completing persons.

The analysis result screen further includes an operation element 71 for designating a year, month and day so that the user can choose a date by operating the operation element 71 and view the analysis result on the chosen date. It is to be noted that, in a case where the analysis result screen is displayed on the display unit 17 of the PC 7 set up at the management office, an operation element for allowing the user to select a restaurant is preferably displayed in the analysis result screen.

Further, this analysis result screen includes an image display area 72 for displaying an image including a non-completing person(s) and a passing person(s) and operation elements 73 for allowing a user to select a non-completing person or a passing person, such that when a non-completing person or a passing person is selected through operation of an associated operation element 73, an image including the selected non-completing person or passing person is displayed in the image display area 72. This allows the user to check the behavior of the non-completing persons and passing persons in detail. It is to be noted here that the image displayed may be a still picture or a moving picture, and it is also possible to display both a still picture and a moving picture.

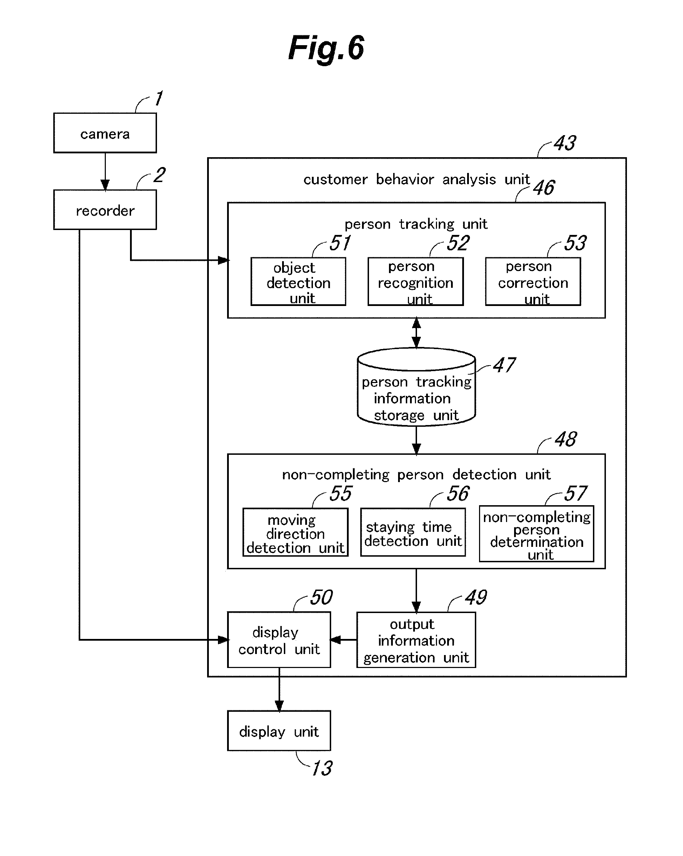

FIG. 6 is a block diagram schematically showing a configuration of the customer behavior analysis unit 43. The analysis result screen shown in FIG. 5 is generated by a non-completing person detection process executed by the customer behavior analysis unit 43. The customer behavior analysis unit 43 includes, as units relating to the non-completing person detection process, a person tracking unit 46, a person tracking information storage unit 47, a non-completing person detection unit 48, an output information generation unit 49 and a display control unit 50.

The person tracking unit 46 executes a process of tracking persons moving in an area around the salad bar based on the image information provided by the camera 1 capturing images of an area around the salad bar. The person tracking information storage unit 47 stores person tracking information representing a result of tracking performed by the person tracking unit 46. The non-completing person detection unit 48 executes, based on the person tracking information stored in the person tracking information storage unit 47, a process of detecting non-completing persons who gave up completing self-service action. The output information generation unit 49 executes a process of generating output information representing a result of analysis based on a result of detection performed by the non-completing person detection unit 48. The display control unit 50 executes a process of obtaining image information from the recorder 2 that stores the image information provided by the cameras 1 and outputting the obtained image information to the display unit 13.

Particularly, in the present embodiment, the output information generation unit 49 executes a process of generating, as the output information, non-completing person detection information relating to the status of occurrence of non-completing persons for each time slot (predetermined time period), and an analysis result screen (see FIG. 5) in accordance with the non-completing person detection information is displayed on the display units 13 and 17 of the PCs 3 and 7.

Further, in the present embodiment, the display control unit 50 executes a process of causing the display units 13 and 17 to display a screen for selecting a non-completing person, and upon a selection operation performed by a user, causing an image including the selected non-completing person to be displayed on the display units 13 and 17. To achieve this, the analysis result screen shown in FIG. 5 includes an image display area 72 for displaying an image including a non-completing person(s) and operation elements 73 for allowing a user to select a non-completing person, such that when a non-completing person is selected through operation of an associated operation element 73, an image including the selected non-completing person is displayed in the image display area 72.

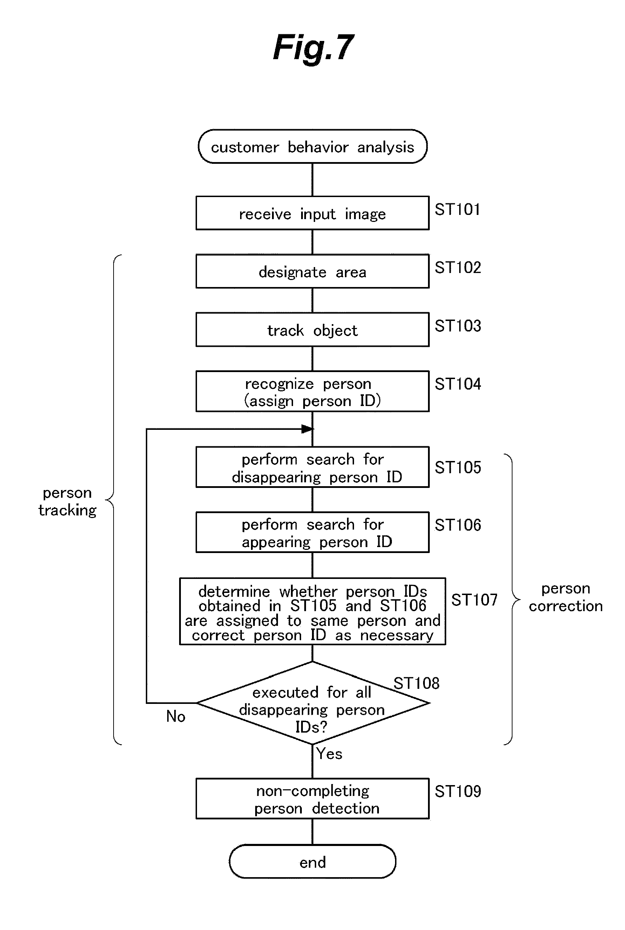

Next, detailed description will be made of a person tracking process executed by the person tracking unit 46 shown in FIG. 6. FIG. 7 is a flowchart showing a procedure of a process performed by the customer behavior analysis unit 43. In the following, description will be made of the person tracking process with reference to FIG. 7, as necessary.

As described in the foregoing, the person tracking unit 46 is configured to track persons moving in an area around the salad bar based on the image information provided by the camera 1 capturing an area around the salad bar, and as shown in FIG. 6, includes an object detection unit 51, a person recognition unit 52 and a person correction unit 53. The person tracking unit 46 may use known image recognition technology (object tracking technology, person recognition technology, etc.).

The person tracking unit 46 performs, upon input of an image from the camera 1 capturing images of an area around the salad bar (ST101 in FIG. 7), a process of designating an area in the image where person tracking is to be performed (ST102 in FIG. 7). This designated area is defined as an area including the access area 32 shown in FIG. 3, namely, as an area substantially the same as the access area 32 or an area larger than the access area 32.

The object detection unit 51 executes a process of detecting objects (moving bodies) present in the designated area from the input image and tracking each detected object (ST103 in FIG. 7). In this object tracking process, position information (coordinate) of each object is obtained for each frame of moving picture, and this position information is cumulatively stored in the person tracking information storage unit 47 as person tracking information together with time information (image capturing time of the frame).

The person recognition unit 52 executes a process of determining whether each object detected by the object detection unit 51 is recognized as a person, and when the object is recognized as a person, assigning a person ID to the object (ST104 in FIG. 7). In this person recognition process, when an object that has not been assigned a person ID is recognized as a person anew, a new person ID is assigned to the object.

The person correction unit 53 executes a process of correcting the person ID(s) assigned by the person recognition unit 52. In the object tracking process, for reasons such as congestion in an area around the salad bar, tracking of an object in the designated area may fail; namely, a moving path of an object that entered the designated area may terminate before the object leaves the designated area. In the person correction process, an object (first object) for which tracking failed is linked to an object (second object) that appeared anew in the designated area after the failure of tracking of the first object, such that the status of movement of persons can be grasped reliably.

Specifically, first, a search is performed to find an object (first object) for which tracking in the designated area failed. Namely, a search is performed (ST105 in FIG. 7) to find, of the person IDs assigned to objects in the person recognition process (ST104 in FIG. 7), a person ID (disappearing person ID) assigned to an object (person) that disappeared from the designated area without a record of leaving the designated area.

Next, a search is performed to find an object (second object) that appeared anew in the designated area after the failure of tracking of the first object in the designated area. Namely, a search is performed (ST106 in FIG. 7) to find, of the person IDs assigned to objects in the person recognition process (ST104 in FIG. 7), a person ID (appearing person ID) assigned to an object (person) that appeared anew in the designated area after the disappearance time relating to the disappearing person ID obtained by the disappearing person ID search (ST105 in FIG. 7).

Then, it is determined whether the object (first object) for which tracking failed in the designated area and the object (second object) that appeared anew in the designated area after the failure of tracking of the first object represent the same person; namely, whether the disappearing person ID obtained in the disappearing person ID search (ST105 in FIG. 7) and the appearing person ID obtained in the appearing person ID search (ST106 in FIG. 7) have been assigned to the same person (object), and if it is determined that these person IDs have been assigned to the same person, the object that appeared anew (second object) is assigned the same person ID that has been assigned to the object for which tracking failed (first object) (ST107 in FIG. 7).

This determination on whether two objects represent the same person is performed based on whether a time period elapsed from the time when tracking of an object (first object) failed to the time when a new object (second object) appeared and a distance from the location where the tracking of the first object failed to the location where the new object (second object) appeared satisfy respective predetermined closeness conditions. Specifically, when each of the elapsed time period and the distance satisfies the respective predetermined closeness condition, it is determined that the object for which tracking failed and the object that appeared anew represent the same person.

In this embodiment, as the closeness conditions, threshold values respectively relating to the time period and the distance are set, such that the determination on whether the two objects represent the same person is performed based on the comparison with the threshold values. Specifically, when the elapsed time period detected is shorter than a predetermined threshold value therefor and the distance detected is smaller than a predetermined threshold value therefor, it is determined that the two objects represent the same person. It is to be noted that the foregoing determination may be performed based on only one of the elapsed time period and the distance.

The foregoing processes (ST105 to ST107 in FIG. 7) are repeated until the processes have been executed for all objects for which tracking failed in the designated area, namely, for all disappearing person IDs (ST108 in FIG. 7). Then, the corrected person IDs are stored in the person tracking information storage unit 47 as person tracking information, and the non-completing person detection process (ST109 in FIG. 7) is performed based on the person tracking information stored in the person tracking information storage unit 47.

As described in the foregoing, in the present embodiment, the person correction process for linking an object (first object) for which tracking failed in the designated area to an object (second object) that appeared anew in the designated area after the failure of tracking of the first object is executed. Thus, even in circumstances where it is difficult to track persons, such as when an area around the self-service area is crowded with persons, it is possible to grasp the status of movement of persons, and therefore, it is possible to minimize failure of detection of non-completing persons who gave up completing self-service action and to detect non-completing persons with high detection rate.

Next, detailed description will be given of a non-completing person detection process executed by the non-completing person detection unit 48 shown in FIG. 6.

The non-completing person detection unit 48 executes a process of obtaining, from the person tracking information storage unit 47, the person tracking information representing a result of tracking performed by the person tracking unit 46, and based on the person tracking information, detecting non-completing persons who gave up completing self-service action of choosing and picking up food items from the salad bar.

As shown in FIG. 3, an access area 32 is defined around the salad bar 31, where the access area 32 is an area that a customer needs to enter to choose and pick up food items from the salad bar 31. The access area 32 is divided into a first area 32a adjoining the salad bar 31 and a second area 32b spaced apart from the salad bar 31. Each of the first area 32a and the second area 32b has a width W substantially corresponding to the size of one person, such that each of the first area 32a and the second area 32b can accommodate a single row of persons. Further, each of the first area 32a and the second area 32b is defined to have a shape of letter L.

The non-completing person detection unit 48 shown in FIG. 6 executes a process of obtaining a moving direction of each detected person relative to the access area 32 and a staying time of the person in the access area 32 and detecting non-completing persons based on the moving direction and the staying time. The non-completing person detection unit 48 includes a moving direction detection unit 55, a staying time detection unit 56 and a non-completing person determination unit 57.

The moving direction detection unit 55 executes, for each object assigned a person ID, a process of detecting a direction from which the object enters the access area and a direction to which the object leaves the access area. The staying time detection unit 56 executes, for each object assigned a person ID, a process of detecting a staying time elapsed from the time of entering the access area to the time of leaving the access area. The non-completing person determination unit 57 executes, based on the result of detection performed by the moving direction detection unit 55 and the staying time detection unit 56, a process of determining whether each object is a non-completing person who gave up completing self-service action.

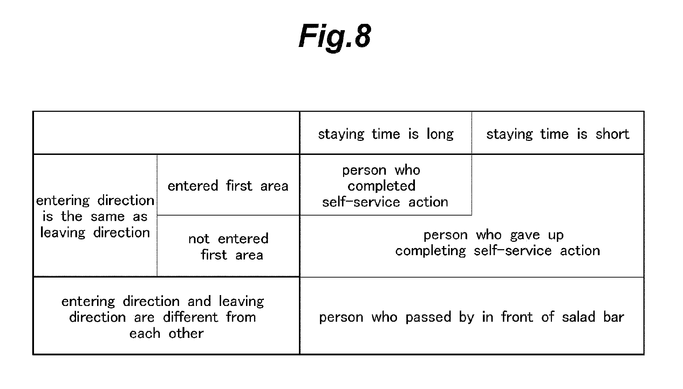

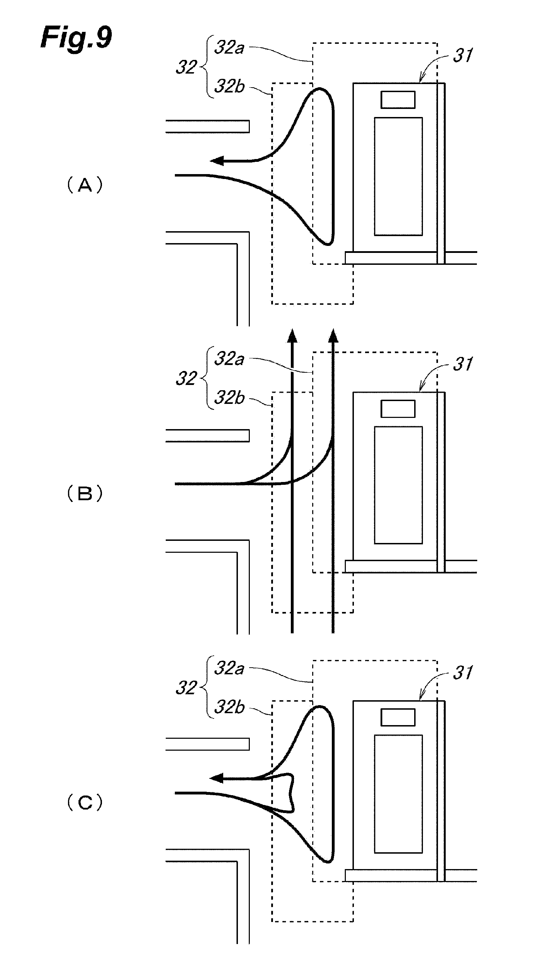

FIG. 8 is an explanatory diagram for explaining a process performed by the non-completing person determination unit 57. FIG. 9 is a schematic plan view showing exemplary moving patterns of a person around the salad bar 31. FIG. 9A shows an exemplary moving pattern in a case where a person completes self-service action. FIG. 9B shows exemplary moving patterns in a case where a person passes by the salad bar. FIG. 9C shows exemplary moving patterns in a case where a person gives up completing self-service action.

As shown in FIG. 8, when the direction from which an object entered the access area 32 and the direction to which the object left the access area 32 are the same (namely, the same route is used when entering and leaving the access area 32) and the staying time of the object in the access area 32 is shorter than a predetermined threshold value, the non-completing person determination unit 57 determines that the object is a non-completing person who gave up completing self-service action of choosing and picking up food items from the salad bar.

As shown in FIG. 9A, when a customer completes self-service action, the customer approaches the salad bar 31 from the table in a dining area, and after picking up food items from the salad bar 31, returns to the table with food items. Also, as shown in FIG. 9C, when a customer gives up completing self-service action, the customer approaches the salad bar 31 from the table in the dining area but returns to the table without picking up food items from the salad bar 31. Thus, when a customer has an intention of performing self-service action, the customer moves from the table to the salad bar 31 and then moves back to the table, and consequently, the direction from which the customer enters the access area 32 and the direction to which the customer leaves the access area 32 become the same (namely, the same route is used when entering and leaving the access area 32).

On the other hand, in such cases as when a customer goes to and comes back from the toilet, when a customer leaves the table to the checkout counter or the doorway after having finished eating, or when a staff member moves between the kitchen and the dining area to take orders from customers, deliver menu items and clear tables, if the salad bar 31 is located along the path, the person (customer or staff member) comes to pass by in the vicinity of the salad bar 31 as shown in FIG. 9B. In this case, the direction from which the person enters the access area 32 and the direction to which the person leaves the access area 32 are different from each other. Therefore, based on the direction from which persons entered the access area 32 and the direction to which persons left the access area 32, it is possible to distinguish persons who approached the salad bar with an intention of performing self-service action and persons who merely passed by in the vicinity of the salad bar from each other.

Further, as shown in FIG. 9A, in a case where a customer completes self-service action, the customer picks up food items from the salad bar, namely, puts desired food items on his/her plate or the like from the containers in which respective food items are contained, and since such serving action requires a certain time, the staying time of the customer in the access area 32 tends to be long.

On the other hand, in a case where a customer gives up completing self-service action for reasons such as that the selection of food items offered at the salad bar 31 does not meet the preference of the customer or that the food item(s) the customer wants has run out, the customer does not stay in the access area 32 for a long time, and thus, the staying time of the customer in the access area 32 tends to be short. Therefore, based on the staying time in the access area 32, it is possible to distinguish persons who completed self-service action and non-completing persons who gave up completing self-service action from each other.

Thus, in the present embodiment, based on whether the direction from which a person entered the access area 32 and the direction to which the person left the access area 32 are the same and whether the staying time of the person in the access area 32 is longer than a predetermined time period, it is possible to determine accurately whether the person is a non-completing person.

It is to be noted that, in the foregoing non-completing person determination process, the threshold value relating to the staying time may be 5 seconds, for example.

Further, the non-completing person determination unit 57 detects non-completing persons who gave up completing self-service action of choosing and picking up food items from the salad bar 31 based on the status of entry of persons into the first area 32a and the second area 32b, as shown in FIG. 8. Specifically, in the present embodiment, if the direction from which a person entered the access area 32 and the direction to which the person left the access area 32 are the same and the person did not enter the first area 32a, the person is determined to be a non-completing person.

As shown in FIG. 9A, when a customer completes self-service action, the customer enters the first area 32a adjoining the salad bar 31 to choose and pick up food items from the salad bar 31.

On the other hand, as shown in FIG. 9C, when a customer give up completing self-service action because of congestion in an area in front of the salad bar 31, the customer may be able to enter the second area 32b but not the first area 32a adjoining the salad bar 31 due to the congestion and will likely to return to the table without entering the first area 32a. Therefore, based on whether persons (customers) entered the first area 32a, it is possible to distinguish persons who completed self-service action and non-completing person who gave up completing self-service action from each other.

Further, as shown in FIG. 9B, when a person passes by in the vicinity of the salad bar 31, the person may enter only the second area 32b. In this case, the direction from which the person enters the access area 32 and the direction to which the person leaves the access area 32 are different. Therefore, by taking into account whether the direction from which each person entered the access area 32 and the direction to which the person left the access area 32 are the same in addition to whether the person entered the first area 32a, it is possible to distinguish non-completing persons who gave up completing self-service action and persons who passed by in the vicinity of the salad bar 31 from each other. It is to be noted that, to reliably distinguish persons who attempted to perform self-service action in the access area 32 and persons who merely passed through the access area 32 from each other, it is possible to additionally take into account other factors such as a particular action or posture of each person (for example, an action of a person stretching out his/her arm to pick up a buffet plate, a posture of a person holding a buffet plate, or the like) when classifying persons.

Thus, in the present embodiment, based on whether the direction from which a person entered the access area 32 and the direction to which the person left the access area 32 are the same and whether the person entered the first area 32a, it is possible to determine accurately whether the person is a non-completing person.

At the salad bar, a staff member may perform container replacement work of removing from the salad bar a container that needs to be refilled with the food item and returning the container after refilling it with the food item. Such action of the staff member relating to container replacement work may be similar to an action of a customer who gives up completing self-service action, and therefore, it may be possible to erroneously detect a staff member performing container replacement work as a non-completing person. However, an action of a staff member and an action of a customer differ with regard to the moving direction relative to the access area 32. Namely, it is possible to determine whether a detected person is a staff member or a customer based on whether the person entered the access area 32 from the kitchen or dining area and/or whether the person left the access area 32 toward the kitchen or dining area.

It is to be noted that though in the present embodiment, the access area 32 (the first area 32a and the second area 32b) is defined as shown FIGS. 3 and 9, the access area 32 may be defined arbitrarily in accordance with the circumstances around the salad bar 31. For example, in a case where there is an obstacle such as a wall or a partition around the salad bar 31, the access area may be defined on a side of the salad bar 31 where the obstacle is not present.

Further, in the present embodiment, as shown in FIG. 3, images of an area around the salad bar 31 are captured at an oblique angle by the camera 1 mounted on the ceiling near the salad bar 31, and the access area 32 (the first area 32a and the second area 32b) is defined as shown in the drawing under the restriction to the imaging angle. However, the access area 32 may be defined appropriately in accordance with the positional relationship between the salad bar 31 and the tables, etc.

Namely, the self-service action of each customer involves movement between the table in the dining area and the salad bar 31, and therefore, the moving direction of the customer relative to the salad bar 31 may vary depending on the positional relationship between the salad bar 31 and the table the customer is seated, and in some cases, customers may approach the salad bar 31 from various directions and may leave the salad bar 31 to various directions. In such a case, the camera 1 set up to capture images in one direction may not be sufficient to capture the movements of customers, and it may be preferable to set up multiple cameras 1 or to set up an all-direction camera above the salad bar 31.

Also, the first area 32a and the second area 32b may be defined appropriately to cope with the moving directions of customers relative to the salad bar 31, and particularly, it is preferred that the first area 32a be defined to extend over the entire region adjoining the salad bar 31 and the second area 32b be defined to entirely surround the first area 32a.

It is to be noted that the foregoing non-completing person detection process may be executed by obtaining the person tracking information from the person tracking information storage unit 47 at an appropriate timing, and the person tracking process also may be performed at an appropriate timing. Thus, these processes may be executed every time the data for a predetermined time period (time slot) becomes available (for example, every time one hour lapses in the case where the processes are performed on an hourly basis), or may be performed at a longer interval such that the processes for different time slots are performed at the same timing. For example, it is possible to perform the processes on a daily basis such that the status of occurrence of non-completing persons for a given day may be available after closure of the restaurant on that day or on the following day.

As described in the foregoing, in the present embodiment, persons who approached the self-service area but gave up completing self-service action (non-completing persons) are detected and a result of analysis relating to the status of occurrence of non-completing persons is output, and thus, a user such as a manager of the commercial establishment (restaurant) can readily know the status of occurrence of non-completing persons. This makes it possible to study the causes that made customers give up completing self-service action and to know the problems in the commercial establishment that could result in complaints from customers before complaints are actually made. Therefore, by taking measures for addressing the problems in the commercial establishment, it is possible to avoid complaints from customers and improve the customer satisfaction.

Further, in the present embodiment, non-completing persons who gave up completing self-service action of choosing and picking up food items from the self-service area (salad bar) are detected in a restaurant such as a casual dining restaurant. Since it requires certain time for a customer to put food items on his/her plate or the like from the self-service area, it is possible to determine based on the staying time whether the customer performed such serving action, and thereby detect non-completing persons who gave up completing self-service action with high accuracy.

Further, in the present embodiment, the output information generation unit 49 generates information relating to the status of occurrence of non-completing person per predetermined time period (time slot), such that an analysis result screen (see FIG. 5) in accordance with the information is displayed. Therefore, a user such as a manager of the commercial establishment is enabled to know the status of occurrence of non-completing persons, particularly the number of detections of non-completing persons (the number of non-completing persons detected) per predetermined time period (time slot). Thereby, the user can identify the time slot(s) in which the number of detections of non-completing persons is high and study the causes that made the customers give up completing self-service action.

Further, in the present embodiment, in response to a selection operation performed by a user on an operation element in the analysis result screen (see FIG. 5), an image including the selected non-completing person is displayed on the display units 13 and 17. Therefore, with the image including the non-completing person, a user can check in detail the situation in which the non-completing person gave up completing self-service action, and study the causes that made the person give up completing self-service action. Further, the user can confirm whether there was an erroneous detection of a non-completing person, namely, whether the person who was detected as a non-completing person actually gave up completing self-service action, whereby the user, such as a manager of the commercial establishment, can accurately know the status of occurrence of non-completing persons. It is to be noted that, a function may be provided to allow a user to correct or delete, on the display units 13 and 17, an erroneous detection result that may be found as a as a result of checking of the behavior of non-completing persons and passing persons in detail.

Next, description will be made of an item status analysis process executed by the item status analysis unit 44 of the PC 3 set up at the restaurant. In this item status analysis process, analysis of the status of containers (e.g., platters, bowls, etc.) containing respective food items and laid out at the salad bar is performed. Specifically, in the present embodiment, container replacement information relating to the status of replacement of containers performed by the restaurant staff is obtained.

At the salad bar, customers serve themselves food items at their own choice, and therefore, unlike the food items for which staff members take orders from customers, the status of sales of each food item provided at the salad bar cannot be known from the order information managed by the POS system. Further, the food items provided at the salad bar are typically prepared by combining multiple ingredients at the kitchen. Therefore, though it may be possible to know the quantity of each ingredient purchased from the purchase information of each ingredient that may be managed by POS system or the like, the quantity of each ingredient purchased alone cannot indicate the status of sales of each food item.

On the other hand, at the salad bar, a variety of food items are provided to customers in such a manner that the food items are contained in respective separate containers, and the restaurant staff performs container replacement work of removing from the salad bar a container that needs to be refilled with a food item and returning the container to the salad bar after refilling it with the food item. Therefore, if the status of replacement of the containers is obtained, it is possible to know the status of sales of each food item without need for the staff members to perform cumbersome work such as inputting data into a terminal. Thus, in the item status analysis process, container replacement information relating to the status of replacement of the containers performed by the restaurant staff is obtained.

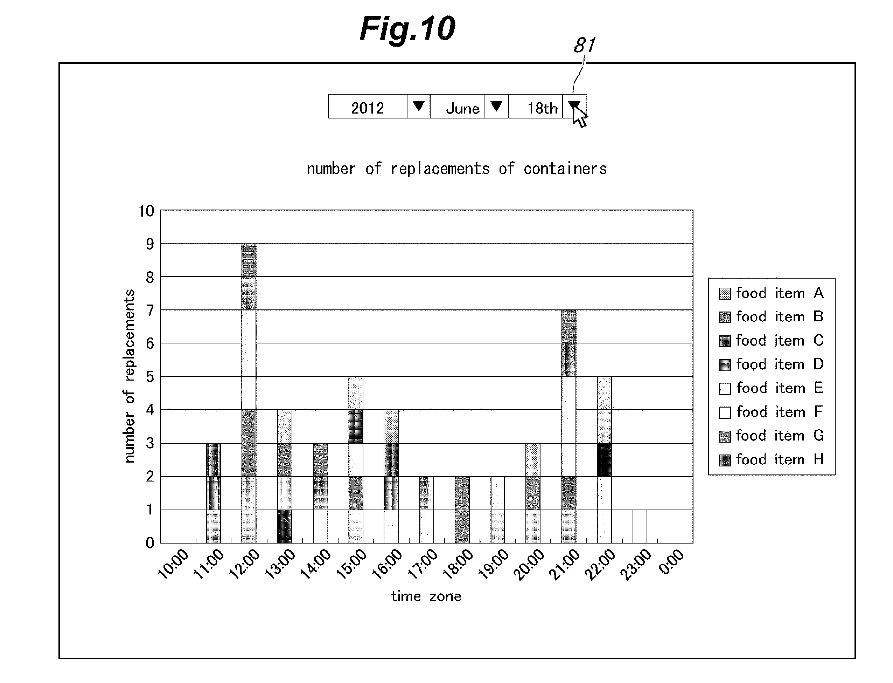

FIG. 10 is an exemplary diagram showing an example of an analysis result screen displaying container replacement information. This analysis result screen is to be displayed on the display unit 13 of the PC 3 set up at the restaurant and the display unit 17 of the PC 7 set up at the management office. This analysis result screen includes a stacked bar chart that shows, as the container replacement information, the number of container replacements for each food item relative to the total number of container replacements, for each time slot during operating hours of the restaurant (10:00 AM to 1:00 AM) on a designated date.

From this analysis result screen, a user such as a manager of the restaurant can understand the characteristics of a change in the total number of container replacements as well as the number of container replacements for each food item depending on the time slot, where the number of container replacements for each food item provides a breakdown of the total number of container replacements. Further, by identifying the time slots in which container replacement(s) is performed for each food item, it is possible to know, for each food item, a time period between container replacements (replacement interval), namely, a time period from when the container was refilled with the food item to when the food item served in the container was consumed. It is also possible to display the replacement intervals in detail based on the replacement times of the containers.

The analysis result screen further includes an operation element 81 for designating a year, month and day so that the user can choose a date by operating the operation element 81 and view the analysis result on the chosen date. It is to be noted that, in a case where the analysis result screen is displayed on the display unit 17 of the PC 7 set up at the management office, an operation element for allowing the user to select a restaurant is preferably displayed in the analysis result screen.

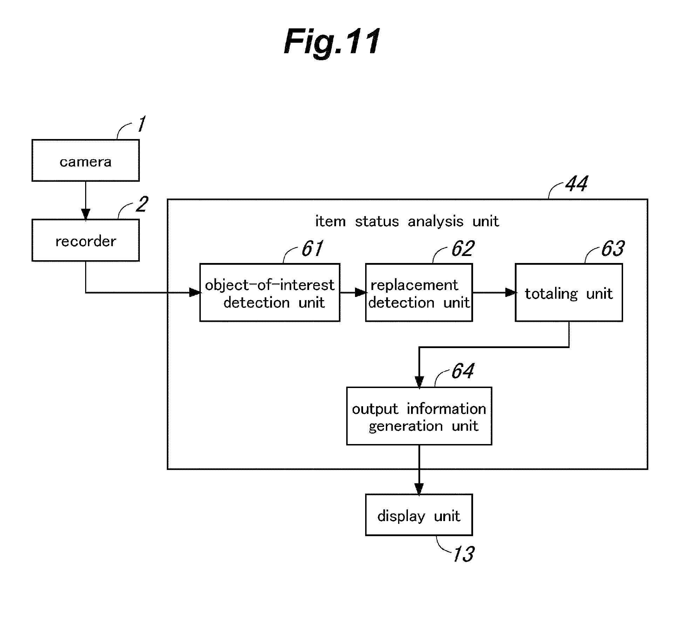

FIG. 11 is a block diagram schematically showing a structure of the item status analysis unit 44. The analysis result screen shown in FIG. 10 is generated by a container replacement detection process executed by the item status analysis unit 44. The item status analysis unit 44 includes, as units relating to the container replacement detection process, an object-of-interest detection unit 61, a replacement detection unit 62, a totaling unit 63 and an output information generation unit 64.

The object-of-interest detection unit 61 performs, based on the image information provided by the camera 1 capturing images of an area around the salad bar, a process of detecting disappearance of each container from the salad bar and return of the container to the salad bar. Further, in this object-of-interest detection process, the time when each container disappeared from the salad bar (disappearance time) and the time when each container is returned to the salad bar (return time) are obtained based on the time of image capture performed by the camera 1.

The replacement detection unit 62 performs, based on the result of detection performed by the object-of-interest detection unit 61, detecting container replacement for each food item. In this replacement detection process, when the object-of-interest detection unit 61 detects return of a container after detecting disappearance of the same container, it is determined that replacement of the container is performed once.

The totaling unit 63 performs a process of totaling the result of detection performed by the replacement detection unit 62 and obtaining the number of container replacements for each time slot (predetermined time period). In this totaling process, the number of container replacements for each food item is obtained separately for each time slot (one hour), which defines a unit time period for totaling, such that the number of container replacements for each food item is obtained for each time slot. This process of totaling for each time slot requires the replacement times of each container, and each replacement time can be determined based on the time information (disappearance time and return time) obtained by the object-of-interest detection unit 61.

The output information generation unit 64 executes a process of generating output information representing a result of analysis based on the result of detection performed by the replacement detection unit 62. In this output information generation process, output information representing the number of container replacements for each time slot obtained by the totaling unit 63 is generated. Particularly, in the present embodiment, the output information generation unit 64 generates, as the output information, information relating to a trend of change in the number of container replacements for each food item based on a time series of number of container replacements for each food item obtained for each time slot, such that an analysis result screen (see FIG. 10) in accordance with the information is displayed on the display units 13 and 17 of the PCs 3 and 7.

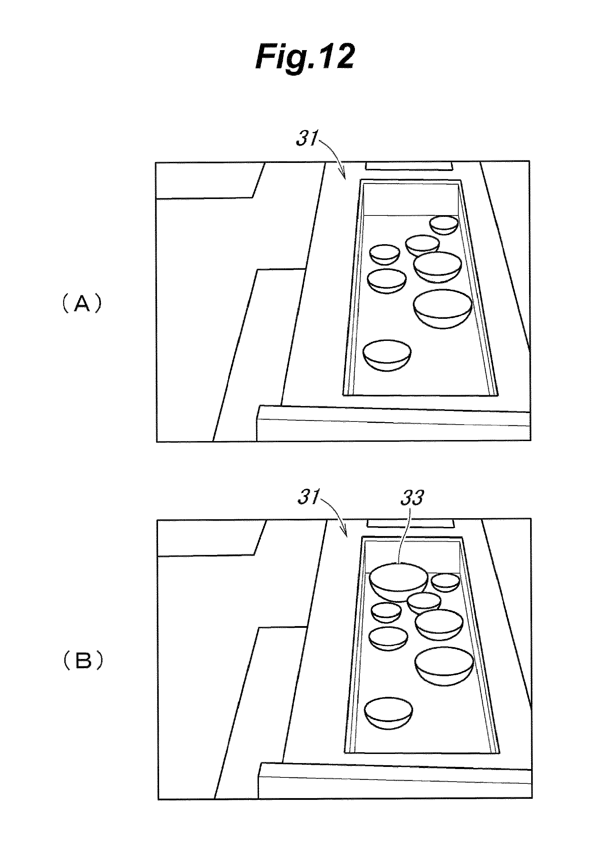

FIG. 12 is an explanatory diagram showing an example of an image captured by the camera 1 set up to capture images of an area around the salad bar 31. The object-of-interest detection unit 61 uses known image recognition technology to detect disappearance of a container from the salad bar 31 (removal detection) and return of the container of the salad bar 31 (return detection). In the removal detection and return detection, according to background difference method, an input image is compared with a background image that has been captured when there is no container placed at the salad bar 31 to detect disappearance (removal) and return of a container.

FIG. 12A shows an image captured immediately after a staff member has removed a container from the salad bar 31, in which a container 33 that is present in a captured image shown in FIG. 12B is absent at the salad bar 31. FIG. 12B shows an image captured immediately after a staff member has returned the container 33 to the salad bar 31, in which the container 33 absent in the captured image shown in FIG. 12A is present at the salad bar 31. Thus, when return of a container is detected after disappearance of the same container is detected, it is determined that replacement of the container is performed once.

As described in the foregoing, in the present embodiment, replacement of objects of interest (containers containing respective food items) placed in the self-service area (salad bar) is detected, and a result of analysis of the status of replacement of the objects of interest is output. Thereby, it is possible for a user such as a manager of the commercial establishment (restaurant) to readily know the status of replacement of the objects of interest, without need for a staff member to perform cumbersome work such as inputting data into a terminal when replacement of the objects of interest is performed. Thus, by developing improvement measures relating to the operation of the commercial establishment based on the status of replacement of the objects of interest, it is possible to improve the customer satisfaction and streamline the operation of the restaurant, thereby increasing the sales and profit of the restaurant.

Further, in the present embodiment, totaling unit 63 totals the result of detection performed by the replacement detection unit 62 and obtains the number of replacements of each object of interest for each predetermined time period (time slot), and this allows a user such as a manager of the commercial establishment to know the number of replacements of each object of interest for each predetermined time period. Further, from the number of replacements of each object of interest for each predetermined time period, the user can know the replacement interval of each object of interest, namely, the time period between replacements of each object of interest.

Further, in the present embodiment, the output information generation unit 64 generates, as the output information, information relating to a trend of change in the number of replacements of each object of interest based on a time series of number of replacements of each object of interest obtained for each predetermined time period (time slot), such that an analysis result screen (see FIG. 10) in accordance with the information is displayed. Thus, a user such as a manager of the commercial establishment can know how the number of replacements of each object of interest change depending on the time slot. Therefore, by making preparations at the commercial establishment in accordance with the change in the number of replacements of each object of interest, it is possible to improve the customer satisfaction and increase the sales and profit.

Further, in the present embodiment, the objects of interest for which detection of replacement is to be performed are containers containing items. The containers containing items each have a predetermined shape, and therefore, even when the item does not have a definite shape or when the item is composed of multiple articles, the accuracy of detection performed by the object-of-interest detection unit and the replacement detection unit can be improved, allowing a user such as a manager of the commercial establishment to know the status of replacement of the objects of interest more accurately. Further, even when it is difficult to count / measure the number / quantity of the items, the user can know the status of sales of the items from the status of replacement of the containers containing the items.

In the present embodiment, the items contained in the containers serving as objects of interest for which replacement is to be performed are food items such as salad components offered at the salad bar. Each of such food items may be prepared by combining multiple ingredients, and therefore, though it may be possible to know the quantity of each ingredient purchased, the status of sales of each food item provided at the salad bar may not be directly obtained. In such a case also, it is possible to know the status of sales of each food item provided at the salad bar by obtaining the status of replacement of the containers. Further, by comparing the status of sales of each food item between different restaurants or by comparing the status of sales of each food item with the number of customers visiting the restaurant, it is possible to appropriately order various materials used as the ingredients, thereby improving the operation efficiency of the restaurant.

In the present embodiment, description was made of an exemplary case in which the invention was applied to a restaurant such as a casual dining restaurant. However, the present invention may be applied to a commercial establishment other than a restaurant, such as a retail store, which can be a supermarket, convenience store, etc. For example, the present invention may be applicable to a case where items are laid out in a bargain bin (self-service area) for customers to choose and pick up, such as at a bargain corner in a supermarket.

Further, though in the present embodiment, description was made of an example in which the entirety of the customer behavior analysis process and the item status analysis process was executed by the PC 3 set up at the restaurant as shown in FIG. 4, the entirety of the customer behavior analysis process and the item status analysis process may be executed by another information processing device, such as the PC 7 set up at the management office or a cloud computer 21 forming a cloud computing system, as shown in FIG. 1, for example. Further, the customer behavior analysis process and the item status analysis process may be executed by cooperation of multiple information processing devices, in which case, the multiple information processing devices are configured to be able to communicate or share information with each other via a communication medium such as an IP network or LAN or via a storage medium such as a hard disk or a memory card. Thereby, the multiple information processing devices jointly executing the customer behavior analysis process and the item status analysis process constitute a customer behavior analysis system and an item status analysis system.

In this case, it is preferred that the PC 3 set up at the restaurant be configured to execute at least the person tracking process in the customer behavior analysis process or the object-of-interest detection process in the item status analysis process. In such a structure, since the person tracking information obtained by the person tracking process and the object-of-interest detection information obtained by the object-of-interest detection process have a small amount of data, even if the remaining processes are performed by an information processing device set up at a place other than the restaurant, such as the PC 7 set up at the management office, the communication load can be small, and thus, it is easy to operate the system in the form of a wide area network.

It may be also preferred that the cloud computer 21 be configured to perform at least the person tracking process in the customer behavior analysis process or the object-of-interest detection process in the item status analysis process. In such a structure, although the person tracking process and the object-of-interest detection process require a large amount of computation, they are achieved by the information processing device constituting a cloud computing system, and therefore, it is not necessary to prepare a high-speed information processing device on the user side; namely at the restaurant or the like. Further, since the remaining processes require a small amount of computation, the remaining processes can be executed as extended functions of an information processing device set up at the restaurant to serve as the sales information management device, and this can reduce the cost born by the user.

The cloud computer 21 may be configured to execute the entirety of the customer behavior analysis process and the item status analysis process. In such a structure, it becomes possible to view the analysis result on a mobile terminal such as a smartphone 22 in addition to the PC 3 set up at the restaurant and the PC 7 set up at the management office, and this allows a user to view the analysis result not only at the restaurant or the management office but also at any other place, such as a place the user is visiting on business.

Further, though in the present embodiment, the PC 3 set up at the restaurant and the PC 7 set up at the management office are used to view the analysis result, it is possible to provide a browser device for viewing the analysis result separately from the PCs 3 and 7. For example, it is possible to use a smartphone 22 as a browser device for viewing the analysis result as described in the foregoing, or to provide the POS workstation 4 with a function of a browser device for viewing the analysis result. Further, though in the present embodiment, the analysis result is displayed on the display units 13 and 17 to enable a user to view the analysis result, it is possible to output the analysis result through a printer.

Further, in the present embodiment, as shown in FIG. 3, the access area 32, which a customer needs to enter to choose and pick up desired item(s) offered at the self-service area, is divided into two areas, i.e., the first area 32a and the second area 32b, but it is possible to divide the access area 32 into three or more areas.

Further, in the present embodiment, description was made of an example in which containers each containing an item(s) were replaceable, but the present invention may be applied to a case where items themselves are replaceable.

Further, in the present embodiment, description was made of an example in which analysis was performed on the self-service action of customers of choosing and picking up food items from the salad bar, but the present invention may be applied to a drink bar or any other self-service area in which items are offered for customers to serve themselves.

Yet further, though in the present embodiment, the time slots each having a duration of one hour define time periods for totaling, the time periods for totaling are not limited to the illustrated embodiment, and may have any duration such as one hour to several hours, one day to several days, one week to several weeks, one month to several months, etc., depending on the user needs.

The customer behavior analysis device, customer behavior analysis system and customer behavior analysis method according to the present invention have an advantage of capable of analyzing customers' self-service action of choosing and picking up items from a self-service area and detecting persons who gave up completing self-service action, and thus, are useful as a customer behavior analysis device, customer behavior analysis system and customer behavior analysis method for performing analysis of the behavior of customers in commercial establishments.

The contents of the original Japanese patent application(s) on which the Paris Convention priority claim is made for the present application as well as the contents of the prior art references mentioned in this application are incorporated in this application by reference.

## Claims

1. A customer behavior analysis device (43) for performing analysis of self-service action of customers of choosing and picking up items from a self-service area (31) in a commercial establishment where the items are offered for self-service, comprising:
a person tracking unit (46) configured to track persons moving in an area around the self-service area based on image information provided by an imaging device (1) capturing images of the area around the self-service area;
a non-completing person detection unit (48) configured to obtain, based on a result of tracking performed by the person tracking unit, a moving direction of each person relative to an access area (32), which a customer needs to enter to choose and pick up items from the self-service area, and a staying time of the person in the access area, and to detect non-completing persons who gave up completing the self-service action based on the moving direction and the staying time; and
an output information generation unit (49) configured to generate output information representing a result of analysis based on a result of detection performed by the non-completing person detection unit,
wherein the person tracking unit comprises:
a person recognition unit (52) configured to determine whether an object detected in a designated area including the access area is recognized as a person, and when the object is recognized as a person, assign a person ID to the object; and
a person correction unit (53) configured to, when tracking of a first object recognized as a person fails in the designated area and thereafter a second object recognized as a person appears anew in the designated area, determine whether the first and second objects represent a same person, and, when it is determined that the first and second objects represent a same person, assign the second object with the same person ID that has been assigned to the first object, wherein the person correction unit determines that the first and second objects represent a same person when at least one of following two conditions is met: that a time period elapsed from a time when the tracking of the first object failed to a time when the second object appeared satisfies a predetermined closeness condition; and that a distance from a location where the tracking of the first object failed to a location where the second object appeared satisfies a predetermined closeness condition.

2. A customer behavior analysis device (43) for performing analysis of self-service action of customers of choosing and picking up items from a self-service area (31) in a commercial establishment where the items are offered for self-service, comprising:
a person tracking unit (46) configured to track persons moving in an area around the self-service area based on image information provided by an imaging device (1) capturing images of the area around the self-service area;
a non-completing person detection unit (48) configured to obtain, based on a result of tracking performed by the person tracking unit, a moving direction of each person relative to an access area (32), which a customer needs to enter to choose and pick up items from the self-service area, and a staying time of the person in the access area, and to detect non-completing persons who gave up completing the self-service action based on the moving direction and the staying time; and
an output information generation unit (49) configured to generate output information representing a result of analysis based on a result of detection performed by the non-completing person detection unit,
wherein the non-completing person detection unit determines that a person is a non-completing person when a direction from which the person entered the access area and a direction to which the person left the access area are same and when the staying time of the person in the access area is shorter than a predetermined threshold value.

3. The customer behavior analysis device according to claim 1 or 2, wherein the commercial establishment is a restaurant and the items include food items.

4. The customer behavior analysis device according to any one of claims 1 to 3, wherein:
the access area is divided into at least a first area (32a) and a second area (32b), the first area adjoining the self-service area and the second area being space apart from the self-service area; and
the non-completing person detection unit detects non-completing persons based on status of entry of persons into the first area and the second area.

5. The customer behavior analysis device according to claim 4, wherein the non-completing person detection unit determines that a person is a non-completing person when a direction from which the person entered the access area and a direction to which the person left the access area are same and when the person did not enter the access area.

6. The customer behavior analysis device according to any one of claims 1 to 5, wherein the output information generation unit generates, as the output information, information relating to status of occurrence of the non-completing persons for each predetermined time period.

7. The customer behavior analysis device according to any one of claims 1 to 6, further comprising a display control unit (50) configured to obtain image information from an image recording device (2) that records the image information provided by the imaging device, and to output the image information to a display device (13),
wherein the display control unit causes a screen for selecting a non-completing person to be displayed on the display device, and upon selection operation performed by a user, causes an image including a selected non-completing person to be displayed on the display device.

8. A customer behavior analysis system for performing analysis of self-service action of customers of choosing and picking up items from a self-service area (31) in a commercial establishment where the items are offered for self-service, comprising:
an imaging device (1) configured to capture images of an area around the self-service area; and
a plurality of information processing devices (3; 7; 21),
wherein the plurality of information processing devices jointly comprise:
a person tracking unit (46) configured to track persons moving in the area around the self-service area based on image information provided by the imaging device;
a non-completing person detection unit (48) configured to obtain, based on a result of tracking performed by the person tracking unit, a moving direction of each person relative to an access area (32), which a customer needs to enter to choose and pick up items from the self-service area, and a staying time of the person in the access area, and to detect non-completing persons who gave up completing the self-service action based on the moving direction and the staying time; and
an output information generation unit (49) configured to generate output information representing a result of analysis based on a result of detection performed by the non-completing person detection unit,
wherein the person tracking unit comprises:
a person recognition unit (52) configured to determine whether an object detected in a designated area including the access area is recognized as a person, and when the object is recognized as a person, assign a person ID to the object; and
a person correction unit (53) configured to, when tracking of a first object recognized as a person fails in the designated area and thereafter a second object recognized as a person appears anew in the designated area, determine whether the first and second objects represent a same person, and, when it is determined that the first and second objects represent a same person, assign the second object with the same person ID that has been assigned to the first object, wherein the person correction unit determines that the first and second objects represent a same person when at least one of following two conditions is met: that a time period elapsed from a time when the tracking of the first object failed to a time when the second object appeared satisfies a predetermined closeness condition; and that a distance from a location where the tracking of the first object failed to a location where the second object appeared satisfies a predetermined closeness condition.

9. A customer behavior analysis system for performing analysis of self-service action of customers of choosing and picking up items from a self-service area (31) in a commercial establishment where the items are offered for self-service, comprising:
an imaging device (1) configured to capture images of an area around the self-service area; and
a plurality of information processing devices (3; 7; 21),
wherein the plurality of information processing devices jointly comprise:
a person tracking unit (46) configured to track persons moving in the area around the self-service area based on image information provided by the imaging device;
a non-completing person detection unit (48) configured to obtain, based on a result of tracking performed by the person tracking unit, a moving direction of each person relative to an access area (32), which a customer needs to enter to choose and pick up items from the self-service area, and a staying time of the person in the access area, and to detect non-completing persons who gave up completing the self-service action based on the moving direction and the staying time; and
an output information generation unit (49) configured to generate output information representing a result of analysis based on a result of detection performed by the non-completing person detection unit,
wherein the non-completing person detection unit determines that a person is a non-completing person when a direction from which the person entered the access area and a direction to which the person left the access area are same and when the staying time of the person in the access area is shorter than a predetermined threshold value.

10. A customer behavior analysis method for performing analysis of self-service action of customers of choosing and picking up items from a self-service area (31) in a commercial establishment where the items are offered for self-service, the analysis being performed by an information processing device (3; 7; 21) set up inside or outside the commercial establishment, the method comprising:
a first step (ST101-ST108) of tracking persons moving in an area around the self-service area based on image information provided by an imaging device (1) capturing images of the area around the self-service area;
a second step (ST109) of obtaining, based on a result of tracking in the first step, a moving direction of each person relative to an access area (32), which a customer needs enter to choose and pick up items from the self-service area, and a staying time of the person in the access area, and detecting non-completing persons who gave up completing the self-service action based on the moving direction and the staying time; and
a third step of generating output information representing a result of analysis based on a result of detection in the second step,
wherein the first step comprises:
a person recognition step (ST104) of determining whether an object detected in a designated area including the access area is recognized as a person, and when the object is recognized as a person, assigning a person ID to the object; and
a person correction step (ST105-ST108) of, when tracking of a first object recognized as a person fails in the designated area and thereafter a second object recognized as a person appears anew in the designated area, determining whether the first and second objects represent a same person, and, when it is determined that the first and second objects represent a same person, assigning the second object with the same person ID that has been assigned to the first object, wherein in the person correction step it is determined that the first and second objects represent a same person when at least one of following two conditions is met: that a time period elapsed from a time when the tracking of the first object failed to a time when the second object appeared satisfies a predetermined closeness condition; and that a distance from a location where the tracking of the first object failed to a location where the second object appeared satisfies a predetermined closeness condition.

11. A customer behavior analysis method for performing analysis of self-service action of customers of choosing and picking up items from a self-service area (31) in a commercial establishment where the items are offered for self-service, the analysis being performed by an information processing device (3; 7; 21) set up inside or outside the commercial establishment, the method comprising:
a first step (ST101-ST108) of tracking persons moving in an area around the self-service area based on image information provided by an imaging device capturing images of the area around the self-service area;
a second step (ST109) of obtaining, based on a result of tracking in the first step, a moving direction of each person relative to an access area (32), which a customer needs enter to choose and pick up items from the self-service area, and a staying time of the person in the access area, and detecting non-completing persons who gave up completing the self-service action based on the moving direction and the staying time; and
a third step of generating output information representing a result of analysis based on a result of detection in the second step,
wherein it is determined in the second step that a person is a non-completing person when a direction from which the person entered the access area and a direction to which the person left the access area are same and when the staying time of the person in the access area is shorter than a predetermined threshold value.
